# EUROPEAN PATENT APPLICATION

(11) **EP 4 607 642 A1**
(43) Date of publication of application: **27.08.2025**
(21) Application number: 23885867.4
(22) Date of filing: 02.11.2023
(51) Int. Cl.: H01M 10/0562, H01B 1/06, H01B 1/08, H01B 1/10, H01M 10/052, H01M 10/056, H01M 10/0568, H01M 10/0585

(54) **BATTERY AND LAMINATE**

(30) Priority: 04.11.2022 JP 2022177561
(71) Applicant: Sumitomo Chemical Company, Limited, Tokyo 103-6020 (JP)
(72) Inventor: DOI, Atsunori, Niihama-shi, Ehime 792-8521 (JP)
(74) Representative: Vossius & Partner Patentanwälte Rechtsanwälte mbB
(86) International application number: PCT/JP2023/039687
(87) International publication number: WO 2024/096113

(57) **Abstract**

A battery includes a positive electrode, a negative electrode, and an electrolyte layer disposed between the positive electrode and the negative electrode, wherein the electrolyte layer includes a first electrolyte layer and a second electrolyte layer, the first electrolyte layer is disposed between the positive electrode and the second electrolyte layer, the first electrolyte layer contains a material different from a material of the second electrolyte layer, the first electrolyte layer contains a solid electrolyte material containing an alkali metal element, a metal element except alkali metal elements or a metalloid element, and a halogen element, and the metal element except alkali metal elements or the metalloid element includes at least one of Zr and In.

## Description

### Technical Field

The present disclosure relates to a battery and a laminate.

### Background Art

Batteries such as lithium ion batteries that perform charge and discharge in accordance with movement of metal ions between a positive electrode and a negative electrode are actively studied because of their high capacity. As an electrolyte for a lithium ion battery or the like, for example, a solution of a lithium salt containing an organic solvent or an ionic liquid is known, and a solid electrolyte has been studied from the viewpoint of safety and processability. As the solid electrolyte, various types of compounds such as an oxide-based solid electrolyte and a sulfide-based solid electrolyte are known.

### Citation List

### Patent Literature

Patent Literature 1: WO 2019/135323 A
Patent Literature 2: WO 2021/002064 A

### Summary of Invention

### Technical Problem

However, a battery including a conventional solid electrolyte has not been able to sufficiently reduce the resistance, and a microcrack or the like is likely to occur in the electrolyte layer.

The present disclosure has been made in view of the above circumstances, and an object of the present disclosure is to provide a battery and a laminate in which a microcrack is less likely to occur in a layer including an electrolyte layer.

### Solution to Problem

The present disclosure includes the following embodiments [1] to [8].
[1] A battery, including a positive electrode, a negative electrode, and an electrolyte layer disposed between the positive electrode and the negative electrode, wherein
   the electrolyte layer includes a first electrolyte layer and a second electrolyte layer,
   the first electrolyte layer is disposed between the positive electrode and the second electrolyte layer,
   the first electrolyte layer contains a material different from a material of the second electrolyte layer,
   the first electrolyte layer contains a solid electrolyte material containing an alkali metal element, a metal element except alkali metal elements or a metalloid element, and a halogen element, and
   the metal element except alkali metal elements or the metalloid element includes at least one of Zr and In.
[2] The battery according to [1], wherein
   the solid electrolyte material contains a compound represented by A_{α}M_{β}Z_{γ}D_{ζ}O_{η},
   wherein A is an alkali metal element, M is a metal element except alkali metal elements or a metalloid element, Z is a halogen element, D is at least one of P and S, and 1.6 ≤ α ≤ 3.5, 0 < β ≤ 1.2, 3 ≤ γ ≤ 6.5, 0 ≤ ζ ≤ 0.5, and 0 ≤ η ≤ 2 are satisfied.
[3] The battery according to [1] or [2], wherein the second electrolyte layer contains an oxide solid electrolyte.
[4] The battery according to any one of [1] to [3], wherein a thickness ratio between the first electrolyte layer and the second electrolyte layer is 1 : 0.2 to 1 : 1.
[5] The battery according to any one of [1] to [4], wherein the first electrolyte layer further contains an ionic liquid.
[6] The battery according to any one of [1] to [5], wherein a frequency at which a phase angle is smallest in a Nyquist plot obtained by performing impedance measurement in a range of 0.1 Hz to 891 kHz with a laminate including the positive electrode and the first electrolyte layer sandwiched between two SUS plates is 100 kHz to 891 kHz, and a ratio A/B of a resistance value (A) of a real part of the impedance measurement at a frequency at which the phase angle is smallest and a resistance value (B) of a real part of the impedance at 891 kHz is 1.0 to 3.5.
[7] A laminate, including a positive electrode, and an electrolyte layer disposed on the positive electrode, wherein
   the electrolyte layer includes a first electrolyte layer and a second electrolyte layer,
   the first electrolyte layer is disposed between the positive electrode and the second electrolyte layer,
   the first electrolyte layer contains a material different from a material of the second electrolyte layer,
   the first electrolyte layer contains a solid electrolyte material containing an alkali metal element, a metal element except alkali metal elements or a metalloid element, and a halogen element, and
   the metal element except alkali metal elements or the metalloid element includes at least one of Zr and In.
[8] The laminate according to [7], wherein a frequency at which a phase angle is smallest in a Nyquist plot obtained by performing impedance measurement in a range of 0.1 Hz to 891 kHz with a laminate including the positive electrode and the first electrolyte layer sandwiched between two SUS plates is 100 kHz to 891 kHz, and a ratio A/B of a resistance value (A) of a real part of the impedance measurement at a frequency at which the phase angle is smallest and a resistance value (B) of a real part of the impedance at 891 kHz is 1.0 to 3.5.

### Advantageous Effects of Invention

According to the present disclosure, it is possible to provide an electric battery and a laminate in which a microcrack is less likely to occur in a layer including an electrolyte layer.

### Brief Description of Drawings

FIG. 1 is a diagram showing results of a charge/discharge test of a secondary battery of Example 1.
FIG. 2 is a diagram showing results of a charge/discharge test of a secondary battery of Example 2.
FIG. 3 is a scanning electron microscope image of a solid electrolyte material of Example 3.
FIG. 4 is an enlarged view of a part of FIG. 3.
FIG. 5 is a scanning electron microscope image of a cross section of a laminate of Example 3.
FIG. 6 is a scanning electron microscope image of a solid electrolyte material of Comparative Example 1.
FIG. 7 is an enlarged view of a part of FIG. 6.
FIG. 8 is a scanning electron microscope image of a cross section of a laminate of Comparative Example 1.
FIG. 9 shows Nyquist plots of laminates of Example 3 and Comparative Example 1.

### Description of Embodiments

A battery of the present embodiment includes a positive electrode (which may be a positive electrode layer), a negative electrode (which may be a negative electrode layer), and an electrolyte layer disposed between the positive electrode and the negative electrode, in which the electrolyte layer includes a first electrolyte layer and a second electrolyte layer, the first electrolyte layer is disposed between the positive electrode and the second electrolyte layer, the first electrolyte layer contains a material different from a material of the second electrolyte layer, and the first electrolyte layer contains a solid electrolyte material containing an alkali metal element, a metal element except alkali metal elements or a metalloid element, and a halogen element. The metal element except alkali metal elements or the metalloid element may include at least one of Zr and In.

A frequency at which a phase angle is smallest in a Nyquist plot obtained by performing impedance measurement in a range of 0.1 Hz to 891 kHz with a laminate including the positive electrode and the first electrolyte layer sandwiched between two SUS plates is 100 kHz to 891 kHz, and a ratio A/B of a resistance value (A) of the impedance measurement and a resistance value (B) of a real part of the impedance at 891 kHz may be 1.0 to 3.5.

The ratio A/B may be 1.0 to 3.0 or 1.0 to 2.8. In addition, the frequency at which the phase angle is smallest may be 200 kHz or more, or 220 kHz or more.

The electrolyte layer contains a solid electrolyte material (halide-based solid electrolyte) containing an alkali metal element, a metal element except alkali metal elements or a metalloid element, and a halogen element. Hereinafter, the solid electrolyte material containing an alkali metal element, a metal element except alkali metal elements or a metalloid element, and a halogen element is also referred to as a first solid electrolyte material. The first solid electrolyte material may be one satisfying at least one of the following (A) to (C). (A) The first solid electrolyte material contains In as the metal element except alkali metal elements. (B) The first solid electrolyte material contains Zr as the metal element except alkali metal elements, and contains two or more types of halogen elements. (C) The first solid electrolyte material further contains an oxygen element.

The alkali metal element contained in the first solid electrolyte material may be any of Li, Na, K, Rb, and Cs, and at least one type of Li, Na, and K may be contained, at least one of Li and Na may be contained, or Li may be contained.

Among the alkali metal elements contained in the first solid electrolyte material, the proportion of one type of alkali metal element may be 80 mol% or more, 90 mol% or more, or 95 mol% or more. The one type of alkali metal element may be at least one type of Li, Na, and K, may be at least one of Li and Na, or may be Li.

The content of the alkali metal element in the first solid electrolyte material may be 15 to 30 mol%, 18 to 28 mol%, or 20 to 27 mol% with respect to the total amount of atoms contained in the first solid electrolyte material.

The metal element except alkali metal elements or the metalloid element is not particularly limited, and examples thereof include divalent to pentavalent elements, and one or more types selected from the group consisting of trivalent elements and tetravalent elements may be contained. The first solid electrolyte material may contain one type or two or more types of metal elements except alkali metal elements or metalloid elements.

Examples of the divalent element include an alkaline earth metal and Zn. The alkaline earth metal may be at least one type of Mg, Ca, Sr, and Ba, may be at least one of Mg and Ca, or may be Mg. Examples of the trivalent metal element include Sc, La, Ce, Pr, Nd, Pm, Sm, Eu, Gd, Tb, Dy, Ho, Er, Yb, Lu, Y, Al, Ga, In, Bi, and Sb. Examples of the tetravalent element include Zr, Ti, Hf, and Sn, and the tetravalent element may be Zr. Examples of the pentavalent metal element include Nb and Ta. Examples of a hexavalent or higher element include W.

The metal element except alkali metal elements or the metalloid element may contain at least one of In and Zr. The content of the metal element except alkali metal elements or the metalloid element in the first solid electrolyte material is preferably 8 to 15 mol%, more preferably 8 to 13 mol%, and still more preferably 9 to 12 mol% based on all elements contained in the first solid electrolyte material.

In the first solid electrolyte material, the total substance amount of Zr and In may be larger than the total substance amount of the alkali metal element and the metal element except Zr and In or the metalloid element. When the first solid electrolyte material contains only one of Zr and In, the total substance amount is the content of the contained element. The total substance amount of Zr and In in the first solid electrolyte material may be 60 mol% or more, 70 mol% or more, 80 mol% or more, or 90 mol% or more of the total substance amount of the metal element except alkali metal elements or the metalloid element.

In the first solid electrolyte material, the content of Y in terms of substance amount may be smaller than the total substance amount of Zr and In. When the first solid electrolyte material contains only one of Zr and In, the total substance amount is the content of the contained element. The content of Y in the first solid electrolyte may be 40 mol% or less, 30 mol% or less, 20 mol% or less, or 10 mol% or less with respect to the total substance amount of the metal element except alkali metal elements or the metalloid element. The first solid electrolyte material need not substantially contain Y.

The first solid electrolyte material may contain one type of element of the metal elements except alkali metal elements or the metalloid elements in an amount of 70 mol% or more, 75 mol% or more, or 80 mol% or more with respect to the total amount of the metal elements except alkali metal elements or the metalloid elements. In this case, the one type of element may be a trivalent or tetravalent element, or may be In or Zr. In this case, the first solid electrolyte material contains a metal element except alkali metal elements or a metalloid element (also referred to as dopant element X1) other than the one type of element. The dopant element X1 is an element different from the one type of element. When the one type element is a trivalent element, the dopant element X1 may be at least one type of element selected from the group consisting of Zr, Sn, Ti, Nb, Ta, Bi, and Y, or may be at least one type of element selected from the group consisting of Zr, Sn, Nb, and Ta. When the one type of element is a tetravalent element, the dopant element X1 may be at least one type of element selected from the group consisting of Bi, Al, Ga, In, Sc, Sm, Sb, La, Zn, Sn, and an alkaline earth metal, or may be at least one type of element selected from the group consisting of Bi, La, Zn, and Sn. Examples of a hexavalent or higher element include W.

The halogen element contained in the first solid electrolyte material of the present embodiment may be any of F, Cl, Br, and I, and at least one type of Cl, Br, and I may be contained, at least one of Cl and Br may be contained, or Cl may be contained. The ion conductive substance may contain only one type of halogen element, or may contain two or more types of halogen elements. When the first solid electrolyte material contains Zr as the metal element except alkali metal elements, the first solid electrolyte material may contain two or more types of halogen elements, may contain Cl and a halogen element other than Cl, and may contain Cl and Br. The content of the halogen element except Cl, or Br may be 10 mol% or less, 0.1 to 10 mol%, or 1 to 8 mol% with respect to the total amount of the halogen elements contained in the first solid electrolyte material.

The content of the halogen element in the first solid electrolyte material is preferably 40 to 70 mol% and more preferably 45 to 68 mol% based on all elements included in the halogen element.

The first solid electrolyte material may contain one type of element of the halogen elements in an amount of 80 mol% or more, 85 mol% or more, or 90 mol% or more with respect to the total amount of the halogen elements. The one type of halogen element may be Cl or Br, or may be Cl. In this case, the first solid electrolyte material contains a halogen element (also referred to as dopant element X2) other than the one type of halogen element. When the one type of halogen element is Cl, the dopant element X2 may be at least one of Br and I, or may be Br.

The first solid electrolyte material may contain at least one of P and S (also referred to as dopant element X3). The content of the dopant element X3 in the first solid electrolyte material may be 0.05 to 5 mol%, 0.1 to 3 mol%, 0.2 to 2 mol%, or 0.3 to 1 mol% with respect to the total amount of atoms contained in the first solid electrolyte material.

When the first solid electrolyte material contains at least one of P and S, the first solid electrolyte material may contain a tetravalent metal element or a metalloid element. Examples of the tetravalent metal element or the metalloid element include Zr, Ti, and Hf, and the tetravalent metal element or the metalloid element may be Zr. In addition, at least one of Hf and Mg may be contained as the dopant element X2.

The content of the dopant element X3 in the first solid electrolyte material may be 50 mol% or less, 1 to 30 mol%, 1 to 20 mol%, or 2 to 10 mol% of the content of the tetravalent metal element or the metalloid element. The content of the dopant element X in the first solid electrolyte material may be 20 mol% or less, 15 mol% or less, 10 mol% or less, or 8 mol% or less of the content of the tetravalent metal element or the metalloid element.

The first solid electrolyte material may have a hexagonal crystal structure, and may have a crystal structure belonging to the space group P6₃mc. The solid electrolyte material having a hexagonal crystal structure may contain at least one type of element selected from the group consisting of Sc, La, Y, Ga, In, Bi, Sb, Ge, Zr, Sn, Nb, and Ta, and may contain Sc.

The first solid electrolyte material may contain a compound represented by the following formula (A).

A_{α}M_{β}Z_{γ}D_{ζ}O_{η} ··· (A)

Here, A is an alkali metal, M is a metal element except alkali metal elements or a metalloid element, Z is a halogen element, D is at least one of P and S, and 1.6 ≤ α ≤ 3.5, 0 < β ≤ 1.2, 3 ≤ γ< 6.5, 0 ≤ ζ ≤ 0.5, and 0 ≤ η ≤ 2 are satisfied.

Examples of the compound represented by formula (A) include compounds represented by the following formulae (1) to (3).

A_{α1}M_{β1}Z_{6-δ1}X1_{ε11}X2_{ε12} ··· (1)

A_{α2}M_{β2}X2_{ε21}Z_{6-γ2}X1_{ε22} ··· (2)

A_{α3}M_{β3}X1_{ε31}Z_{δ3}D_{ζ}O_{η} ··· (3)

In formula (1), A, M, and Z are an alkali metal element, a trivalent metal element or a metalloid element, and a halogen element, respectively, and specific examples thereof include those described above. M preferably includes In. X1 and X2 are a dopant element X1 and a dopant element X2, respectively, and specific examples thereof include those described above. α1 may be 2 ≤ α1 < 3.5, or 2.5 ≤ α1 < 3. β1 may be 0.5 ≤ β1 ≤ 1.1, or 0.5 ≤ β1 ≤ 1. δ1 may be 0 ≤ δ1 ≤ 1, or 0 ≤ δ1 ≤ 0.5. ε11 may be 0 ≤ ε11 ≤ 0.7, 0 < ε11 ≤ 0.5, or 0.01 ≤ ε11 ≤ 0.3. ε12 may be 0 ≤ ε12 ≤ 0.7, 0 < ε11 ≤ 0.5, or 0.01 ≤ ε11 ≤ 0.3.

In formula (2), A, M, and Z are an alkali metal element, a tetravalent metal element or a metalloid element, and a halogen element, respectively, and specific examples thereof include those described above. M preferably contains Zr. X1 and X2 are a dopant element X1 and a dopant element X2, respectively, and specific examples thereof include those described above. α2 may be 1.6 ≤ α2 ≤ 2.5, 1.8 ≤ α2 ≤ 2.4, or 2 ≤ α2 ≤ 2.3. β2 may be 0 < β2 ≤ 1.1, 0.5 ≤ β2 ≤ 1, or 0.8 ≤ β2 ≤ 1. γ2 may be 0 ≤ γ2 < 1, 0.01 ≤ γ2 ≤ 0.8, 0.02 ≤ γ2 ≤ 0.7, 0.1 ≤ γ2 ≤ 0.6, or 0.2 ≤ γ2 ≤0.6. ε21 may be 0 ≤ ε21 ≤ 0.7, 0< ε21 ≤ 0.5, or 0.01 ≤ ε21 ≤0.3. ε22 may be 0 < ε22 < 0.8, or 0 < ε21 ≤0.6. When X2 is iodine, ε21 may be 0.01 ≤ ε21 ≤ 0.3, or 0.015 ≤ ε21 ≤ 0.1.

In formula (3), A, M, and Z are an alkali metal element, a tetravalent metal element or a metalloid element, and a halogen element, respectively, and specific examples thereof include those described above. M preferably contains Zr. X1 and D are a dopant element X1 and a dopant element X3, respectively, and specific examples thereof include those described above. α may be 1.5 ≤ α ≤ 3, 1.8 ≤ α3 ≤ 2.5, 1.9 ≤ α3 ≤ 2.3, or 1.95 ≤ α3 ≤ 2.2. β may be 0.5 ≤ β ≤ 2, 0.7 ≤ β3 ≤ 1.4, 0.8 ≤ β3 ≤ 1.2, or 0.9 ≤ β3 ≤ 1.1. ζ may be 0.005 ≤ ζ ≤0.5, 0.01 ≤ ζ ≤0.2, 0.02 ≤ ζ ≤0.15, or 0.025 ≤ ζ ≤0.10. δ3 may be 3.5 ≤ δ3 ≤ 5, 3.7 ≤ δ3 ≤ 4.3, or 3.8 ≤ δ3 ≤ 4.1. η may be 0.1 ≤ η ≤ 1.5, 0.7 ≤ η ≤ 1.5, 0.8 ≤ η ≤ 1.3, or 0.9 ≤ η ≤ 1.1.

The first solid electrolyte material may have a particle shape. In this case, the average particle size of the first solid electrolyte material may be 1 to 50 µm. The particle of the first solid electrolyte material may have a rugged structure with a size of 0.5 to 2 µm. In the particle of the first solid electrolyte material, a microcrack with a size of 0.5 µm or more need not exist.

A method for producing the first solid electrolyte material is not particularly limited, and examples thereof include a method including a step of performing ball milling on a raw material. Annealing may be performed on the product after ball milling. When a hexagonal solid electrolyte material is obtained, the method for producing the first solid electrolyte material may be a method including a step of heating a raw material under a pressure of 1 GPa or more.

The raw material is not particularly limited, and may be, for example, an alkali metal halide, a chloride of a metal element except alkali metals or a metalloid element, and a compound containing the dopant element X1 or X2. When the dopant element is X1, the compound containing the dopant element may be a halide of X1. When the dopant element is X2, the compound containing the dopant element may be an alkali metal bromide or an alkali metal iodide. It is preferable to mix the raw materials before performing ball milling, and it is more preferable to mix the raw materials under an inert atmosphere (for example, Ar atmosphere).

The conditions of the ball milling are not particularly limited, and can be set to 10 to 100 hours at a rotational speed of 200 to 700 rpm. The grinding time is preferably 24 hours to 72 hours, and more preferably 36 to 60 hours.

The balls used for the ball milling are not particularly limited, and zirconia balls can be used. The size of the balls used is not particularly limited, and balls of 2 mm to 10 mm can be used.

The raw materials are sufficiently mixed by performing the ball milling for the above-described time, and the mechanochemical reaction is promoted, so that the ionic conductivity of the obtained compound can be improved.

The ball milling may include multi-stage steps with different rotational speeds. For example, the step of performing ball milling may include a first step, a second step, and a third step in this order, and the rotational speed in the second step may be higher than that in the first step and the third step. In this case, the rotational speed in the third step may be higher than that in the first step.

Annealing is preferably performed under an inert atmosphere or under vacuum. The annealing temperature is preferably, for example, 150 to 300°C, and more preferably 200 to 250°C. The annealing time may be, for example, 1 to 10 hours, and is preferably 3 to 6 hours.

The positive electrode active material is not particularly limited, and examples thereof include an alkali metal composite oxide containing an alkali metal element and at least one type of metal element selected from the group consisting of a transition metal element and Al. The transition metal element may be at least one type selected from the group consisting of V, Cr, Mn, Fe, Co, Ni, and Cu, and Ni may be contained. For example, when the alkali metal element is lithium (that is, in the case of a lithium composite oxide,), examples of the lithium composite oxide include LiCoO₂, LiNiO₂, LiMn₂O₄, LiNi_{0.3}Mn_{1.5}O₄, Li₂MnO₃, LiNiₓMn_{y}Co_{1-x-y}O₂ [0 < x + y < 1], LiNiₓCo_{y}Al_{1-x-y}O₂ [0 < x + y < 1], LiCr_{0.5}Mn_{0.5}O₂, LiFePO₄, Li₂FeP₂O₇, LiMnPO₄, LiFePO₃, Li₃V₂(PO₄)₃, Li₂CuO₂, Li₂FeSiO₄, and Li₂MnSiO₄. When the positive electrode active material contains an alkali metal element other than Li, specific examples thereof include those in which Li in the above specific examples is replaced with another alkali metal. Examples of the alkali metal other than Li include Na and K.

The positive electrode (positive electrode material) of the present embodiment may further contain a solid electrolyte material, a binding resin (binder), a conductive aid, or the like. The binding resin is not particularly limited, and examples thereof include a fluorine-based resin. The fluorine-based resin is preferably a resin having a carbon chain as a main chain. The carbon chain may be one formed by radical polymerization of an ethylenically unsaturated group. Examples of the fluororesin include poly(vinylidene fluoride-co-hexafluoropropylene) (PVDF-HFP) and polyvinylidene fluoride (PVDF). The content of the binding resin in the positive electrode may be 0.5 to 10 mass% or 1 to 7 mass%.

Examples of the conductive aid include graphites such as natural graphite (scaly graphite or the like) and artificial graphite; carbon blacks such as acetylene black, Ketjen black, channel black, furnace black, lamp black, and thermal black; and carbon fibers. The content of the conductive aid in the positive electrode may be 0.5 to 10 mass% or 1 to 7 mass%.

The solid electrolyte material contained in the positive electrode may be one type or two types of the first solid electrolyte materials and the second solid electrolyte materials described above.

The content of the positive electrode active material in the positive electrode material (or positive electrode) may be 50 mass% or more, 60 mass% or more, 70 mass% or more, 95 mass% or less, or 90 mass% or less with respect to the total amount of the positive electrode material.

The negative electrode material may contain a negative electrode active material, and if necessary, a polymer electrolyte, a binding resin, a conductive aid, an organic solvent, an ionic liquid, or the like.

Examples of the negative electrode active material include simple substances of elements and alloys or composites containing these elements such as an alkali metal element, Si, P, Sn, Si-Mn, Si-Co, Si-Ni, In, and Au, carbon materials such as graphite, substances in which alkali metal ions are inserted between layers of the carbon materials, and oxides containing titanium. The alkali metal element may be Li, Na, or K, may be Li or Na, or may be Li.

The oxide containing titanium may be a compound given by a compositional formula: AₛTiOₜ (A is an alkali metal element, and s ≥ 0 is satisfied). Here, the alkali metal element A may be Li, Na, or K, may be Li or Na, or may be Li.

The first electrolyte layer may be one formed of a first electrolyte composition. The first electrolyte composition may contain a solid electrolyte material, and if necessary, a polymer electrolyte, a binding resin, an organic solvent, an ionic liquid, or the like. The solid electrolyte material may contain at least one type of the above-described first solid electrolyte material and optionally a solid electrolyte material (second solid electrolyte material) other than the first solid electrolyte material.

The second solid electrolyte material is not particularly limited, and may be an oxide (oxide-based solid electrolyte), a sulfide (sulfide-based solid electrolyte), a hydride (hydride-based solid electrolyte), or the like. The second solid electrolyte material may contain an alkali metal element.

### (Oxide-based Solid Electrolyte)

Examples of the oxide-based solid electrolyte include oxides such as a perovskite-type oxide, a NASICON-type oxide, a LISICON-type oxide, and a garnet-type oxide, and oxides obtained by doping the oxides with other cations or anions.

Examples of the perovskite-type oxide include Li-La-Ti-based oxides such as LiₐLa₁₋ₐTiO₃ (0 < a < 1), Li-La-Ta-based oxides such as Li_{b}La_{1-b}TaO₃ (0 < b < 1), and Li-La-Nb-based oxides such as Li_{c}La_{1-c}NbO₃ (0 < c < 1).

Examples of the NASICON-type oxide include Li_{1+d}Al_{d}Ti_{2-d}(PO₄)₃ (0≤ d ≤ 1). The NASICON-type oxide is an oxide represented by LiₘM¹ₙM²ₒPₚO_{q} (in the formula, M¹ is one or more elements selected from the group consisting of B, Al, Ga, In, C, Si, Ge, Sn, Sb, and Se, M² represents one or more elements selected from the group consisting of Ti, Zr, Ge, In, Ga, Sn, and Al, and m, n, o, p, and q are arbitrary positive numbers), and examples thereof include Li_{1+x+y}Alₓ(Ti,Ge)₂₋ₓSi_{y}P_{3-y}O₁₂ (0 < x < 2, 0 < y < 3) (LATP).

Examples of the LISICON-type oxide include an oxide represented by Li₄M³O₄-Li₃M⁴O₄ (M³ is one or more elements selected from the group consisting of Si, Ge, and Ti, and M⁴ is one or more elements selected from the group consisting of P, As, and V).

Examples of the garnet-type oxide include Li-La-Zr-based oxides such as Li₇La₃Zr₂O₁₂ (LLZ) and Li₇₋ₐ₂La₃Zr₂₋ₐ₂Taₐ₂O₁₂ (LLZT, a2 may be 0 < a2 < 1, 0.1 < a2 < 0.8, or 0.2 < a2 < 0.6).

The oxide-based solid electrolyte may be a crystalline material or an amorphous material.

Examples of the oxide-based solid electrolyte include Li_{6.6}La₃Zr_{1.6}Ta_{0.4}O₁₂ and Li_{0.33}La_{0.55}TiO₃.

### (Sulfide-based Solid Electrolyte)

Examples of the sulfide-based solid electrolyte include a Li₂S-P₂S₅-based compound, a Li₂S-SiS₂-based compound, a Li₂S-GeS₂-based compound, a Li₂S-B₂S₃-based compound, a Li₂S-P₂S₃-based compound, LiI-Si₂S-P₂S₅, LiI-Li₂S-P₂O₅, LiI-Li₃PO₄-P₂S₅, and Li₁₀GeP₂S₁₂.

Note that, in the present description, the expression "-based compound" indicating a sulfide-based solid electrolyte is used as a generic term for solid electrolytes mainly containing a raw material such as "Li₂S" or "P₂S₅" described before "-based compound". For example, the Li₂S-P₂S₅-based compound includes a solid electrolyte containing Li₂S and P₂S₅ and further containing other raw materials. In addition, the Li₂S-P₂S₅-based compound also includes a solid electrolyte in which a mixing ratio of Li₂S and P₂S₅ is different.

Examples of the Li₂S-P₂S₅-based compound include Li₂S-P₂S₅, Li₂S-P₂S₅-LiI, Li₂S-P₂S₅-LiCI, Li₂S-P₂S₅-LiBr, Li₂S-P₂S₅-Li₂O, Li₂S-P₂S₅-Li₂O-Lil, and Li₂S-P₂S₅-ZₘSₙ (m and n are positive numbers, and Z is Ge, Zn or Ga).

Examples of the Li₂S-SiS₂-based compound include Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-SiS₂-Li₃PO₄, Li₂S-SiS₂-Li₂SO₄, and Li₂S-SiS₂-LiₓMO_{y} (x and y are positive numbers, and M is P, Si, Ge, B, Al, Ga, or In).

Examples of the Li₂S-GeS₂-based compound include Li₂S-GeS₂ and Li₂S-GeS₂-P₂S₅.

The sulfide-based solid electrolyte may be a crystalline material or an amorphous material.

### (Hydride-based Solid Electrolyte)

Examples of the hydride-based solid electrolyte material include LiBH₄, LiBH₄-3KI, LiBH₄-PI₂, LiBH₄-P₂S₅, LiBH₄-LiNH₂, 3LiBH₄-LiI, LiNH₂, Li₂AlH₆, Li(NH₂)₂I, Li₂NH, LiGd(BH₄)₃Cl, Li₂(BH₄)(NH₂), Li₃(NH₂)I, and Li₄(BH₄)(NH₂)₃.

Examples of the second solid electrolyte material include compounds in which a part or all of Li of the compounds listed as specific examples of the oxide-based solid electrolyte, the sulfide-based solid electrolyte, or the hydride-based solid electrolyte is substituted with Na, K, Rb, or Cs.

The second electrolyte layer is formed from the second electrolyte composition. The second electrolyte layer may contain a material different from a material of the first electrolyte layer. The second electrolyte composition may contain a solid electrolyte material, and if necessary, a polymer electrolyte, a binding resin, an organic solvent, an ionic liquid, or the like. The solid electrolyte material may contain at least one type of the first solid electrolyte material and the second solid electrolyte material described above, may contain the second solid electrolyte material, or may contain at least one of a sulfide-based solid electrolyte and an oxide-based solid electrolyte.

The thickness ratio between the first electrolyte layer and the second electrolyte layer ((thickness of first electrolyte layer): (thickness of second electrolyte layer)) may be 1 : 0.2 to 1 : 1, 1 : 0.3 to 1:1, or 1 : 0.5 to 1 : 1.

By including the first electrolyte layer and the second electrolyte layer, an interface enabling good ion conduction is formed for each of the interface between the positive electrode and the first electrolyte layer and the interface between the negative electrode and the second electrolyte layer. In addition, ion conduction between the first electrolyte layer and the second electrolyte layer is also improved. As a result, a battery capable of good charge and discharge can be obtained.

This is due to the characteristic that the distortion of the impedance of the first electrolyte layer is small (mechanically, this is due to the characteristic of having flexibility and facilitating the formation of a favorable interface).

In addition, since the first electrolyte layer has a characteristic of having a small distortion and flexibility, a crack is less likely to occur inside the battery, which also contributes to obtaining good charge/discharge characteristics in that the ion conduction path is less likely to break.

The first electrolyte layer may have a region having no microcracks exceeding 10 µm within a range of 20 µm in the vertical direction (normal direction) from the interface between the positive electrode layer and the first electrolyte layer. In addition, a void structure may exist in the region.

The battery may include a separator. The separator may be a porous material or a resin porous material. Specific examples thereof include a porous polyolefin film and a porous ceramic film.

A method for producing a battery of the present embodiment is not particularly limited, but may include a step of producing a positive electrode by pressurizing a positive electrode material and a step of producing a first electrolyte layer by pressurizing a first electrolyte composition. The step of producing a positive electrode by pressurizing a positive electrode material and the step of producing a first electrolyte by pressurizing a first electrolyte composition may be performed simultaneously. In this case, the positive electrode and the first electrolyte layer are produced by disposing the first electrolyte composition on the positive electrode material and pressurizing these members together. The second electrolyte layer may be formed by disposing the second electrolyte composition on the first electrolyte layer, followed by pressurization. In addition, the negative electrode may be formed by disposing the negative electrode or disposing the negative electrode material on the second electrolyte layer, followed by pressurization.

### Examples

### <Preparation of Solid Electrolyte Material>

### (Example 1)

In an argon atmosphere having a dew point of -70°C or lower (hereinafter referred to as a dry argon atmosphere), LiCl, ZrCl₄, and LiBr were mixed in a molar ratio of 1.5 : 1 : 0.5 to prepare a raw material.

The above-described raw material was put in a zirconia pot for a planetary ball mill, and 65 g of zirconia balls having a diameter of 4 mm were put therein. A solid electrolyte material (Li₂ZrCl_{5.5}Br_{0,5}) was obtained by performing a treatment so as to cause a mechanochemical reaction under the conditions of 48 hours and 380 rpm by a planetary ball mill apparatus (PM 400, manufactured by Verder Scientific GmbH & Co. KG). The ball mill was operated in a mode in which the ball mill is stopped for 1 minute as an interval after every 10 minutes of rotation, and the rotation direction is alternately switched between clockwise and counterclockwise.

### <Preparation of Secondary Battery>

In a dry argon atmosphere, the solid electrolyte material of Example 1, LiNi_{1/3}Mn_{1/3}Co_{1/3}O₂, and acetylene black were weighed in an amount of 29 parts by mass, 67 parts by mass, and 4 parts by mass respectively, and mixed in a mortar to obtain a mixture.

In an insulating cylinder having an inner diameter of 10 mm, 100 mg of the solid electrolyte material of Example 1 and 15 mg of the above-described mixture were sequentially layered to obtain a laminate. A pressure of 200 MPa was applied to the laminate to form a first electrode (the layer of the mixture) and a first solid electrolyte layer (the layer of the solid electrolyte material of Example 1, 0.5 mm).

Subsequently, 60 mg of a sulfide solid electrolyte Li₆PS₅Cl was placed so as to come into contact with the first solid electrolyte layer to obtain a laminate. A pressure of 200 MPa was applied to the laminate to form a second solid electrolyte layer (0.3 mm). The first solid electrolyte layer was sandwiched between the first electrode and the second solid electrolyte layer.

Subsequently, 60 mg of an In foil was placed so as to come into contact with the second solid electrolyte layer, and 2 mg of a Li foil was further placed so as to come into contact with the In foil to obtain a laminate. A pressure of 200 MPa was applied to the laminate to form a second electrode.

A current collector formed of stainless steel was attached to the first electrode and the second electrode, and lead wires were then attached to the current collector. All of the members were disposed and sealed in a desiccator, and a secondary battery of Example 1 was obtained as described above.

### <Charge/Discharge Test>

As a charge/discharge tester, the following product was used.

Charge/discharge tester: TOSCAT-3100 manufactured by Toyo System Co., Ltd.

A charge/discharge test was performed on the secondary battery at 60°C at three different C-rates of 0.1 C (0.19 mA/cm²), 1 C (1.9 mA/cm²), and 3 C (5.8 mA/cm²).

Charge was performed up to 3.7 V at a current density corresponding to each C-rate at a constant current and a constant voltage (CCCV charge). In discharge, discharge was performed up to 1.9 V at a current density corresponding to each C-rate.

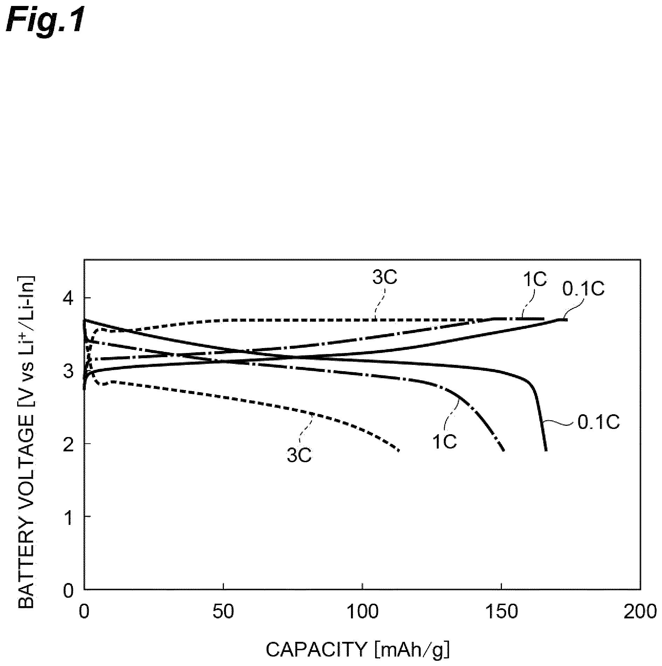

In FIG. 1, the results of the charge/discharge test of the secondary battery of Example 1 are shown.

### (Example 2)

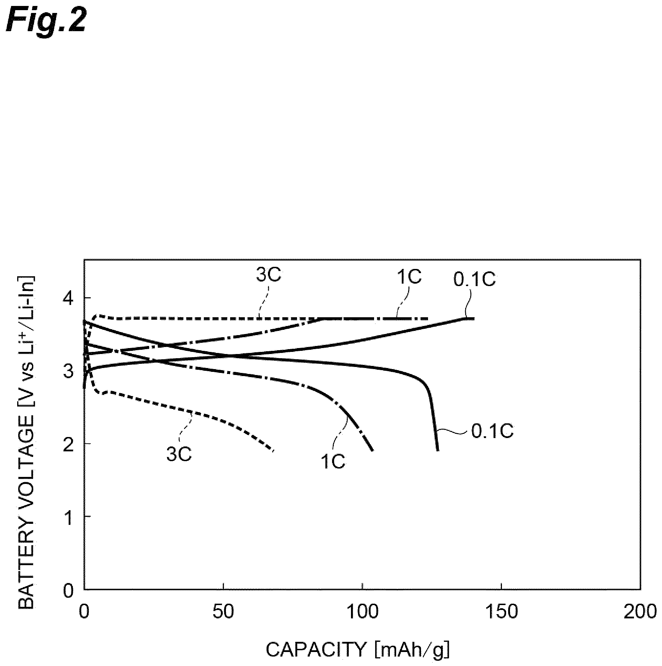

A solid electrolyte material (Li₂ZrCl₆) was obtained in the same manner as in Example 1 except that LiCl and ZrCl₄ were mixed in a molar ratio of 3 : 1 to prepare a raw material, and then a secondary battery was prepared in the same manner, and a charge/discharge test was performed. In FIG. 2, the results of the charge/discharge test of the secondary battery of Example 2 are shown.

### (Example 3)

In an argon atmosphere having a dew point of -70°C or lower (hereinafter referred to as a dry argon atmosphere), LiCl, ZrCl₄, BiCl₃, ZnCl₂, and LiBr were mixed so as to have a preparation composition of Li_{2.05}Zr_{0.96}Bi_{0.03}Zn_{0.01}Cl_{5.7}Br_{0.3} to prepare a raw material.

In a zirconia pot for a planetary ball mill, 1.2 g of the above-described raw material was put, and 55 g of zirconia balls having a diameter of 4 mm and 15 g of zirconia balls having a diameter of 8 mm were put therein. A ball milling step was performed at 300 rpm for 8 hours, at 350 rpm for 8 hours, and at 320 rpm for 8 hours in this order by the planetary ball mill apparatus, and a treatment was performed so as to cause a mechanochemical reaction to obtain a solid electrolyte material. The ball mill was operated in a mode in which the ball mill is stopped for 1 minute as an interval after every 10 minutes of rotation, and the rotation direction is alternately switched between clockwise and counterclockwise.

### (Example 4)

Synthesis was performed under the same conditions as in Example 3 except that Li₂O, Li₃PO₄, ZrCl₄, and MgCl₂ were mixed in an argon atmosphere having a dew point of -70°C or lower (hereinafter referred to as a dry argon atmosphere) so as to have a preparation composition of Li₂Zr_{0.95}Mg_{0.05}Cl_{3.9}O(PO₄)_{0.033} to prepare a raw material.

### <Observation of Particle with Scanning Electron Microscope (SEM)>

Observation was performed using a scanning electron microscope JCM-7000 (manufactured by JEOL Ltd.). Observation of a particle of the solid electrolyte material prepared was performed under conditions of an acceleration voltage of 15 kV and a high vacuum mode.

### <Measurement of Resistance>

In a dry argon atmosphere, the solid electrolyte material of Example 3, LiNi_{1/3}Mn_{1/3}Co_{1/3}O₂, and acetylene black were weighed in an amount of 29 parts by mass, 67 parts by mass, and 4 parts by mass, respectively, and mixed in a mortar to obtain a mixture.

In an insulating cylinder having an inner diameter of 10 mm, 100 mg of the solid electrolyte material of Example 3 and 15 mg of the above-described mixture were sequentially layered to obtain a laminate. A pressure of 200 MPa was applied to the laminate to form a first electrode (the layer of the mixture) and a first solid electrolyte layer (the layer of the solid electrolyte material of Example 3, 0.5 mm).

The laminate was sandwiched between two SUS plates. Each of the terminals was electrically connected to a terminal of an impedance analyzer (Sl1260 manufactured by Solatron Analytical). The resistance value was 274 Ω.

Similarly, a laminate was prepared in the same manner as in Example 3 except that the solid electrolyte material of Example 4 was used in place of the solid electrolyte material of Example 3, and impedance measurement was performed.

From the impedance measurement results, a graph of a Cole-Cole plot (Nyquist plot) was created. In the Cole-Cole plot, the real value of the impedance at the measurement point where the absolute value of the phase of the complex impedance is smallest was regarded as a resistance value.

A frequency at which a phase angle is smallest in a Nyquist plot obtained by performing impedance measurement in a range of 0.1 Hz to 891 kHz, and a ratio A/B of a resistance value (A) of the impedance measurement and a resistance value (B) of a real part of the impedance at 891 kHz are summarized in Table 1.

### (Comparative Example 1)

LiCl and YCl₃ were used as raw materials and mixed in a molar ratio of 3 : 1 to prepare a raw material. A solid electrolyte material (Li₃YCl₆) was obtained in the same manner as in Example 1. Observation of the solid electrolyte material and the cross section of the laminate with a scanning electron microscope and impedance measurement of the laminate were performed in the same manner as in Example 3 using the obtained solid electrolyte material. The resistance value was 2,400 Ω.

**[Table 1]**

| | Frequency*¹ | Resistance value A (Ω) *² | Resistance value B (Ω) *² | A/B | Microcrack |
|---|---|---|---|---|---|
| Example 3 | 250 kHz | 270 | 104.8 | 2.58 | Absent |
| Example 4 | 446 kHz | 107 | 71.4 | 1.50 | Absent |
| Comparative Example 1 | 71 kHz | 2400 | 665 | 3.61 | Present |

| | | | | | |
|---|---|---|---|---|---|
| *1: Frequency at which phase angle is smallest *2: Resistance value of real part of impedance at frequency at which phase angle is smallest *3: Resistance value (Ω) of real part of impedance at 891 kHz | | | | | |

### <Observation of Cross Section with Scanning Electron Microscope (SEM)>

Observation was performed using a scanning electron microscope JCM-7000 (manufactured by JEOL Ltd.). Observation was performed under conditions of an acceleration voltage of 15 kV and a high vacuum mode.

For the measurement sample, as described above, the laminate prepared in a pressure molding die was taken out, cut in the thickness direction, and the cross section was observed.

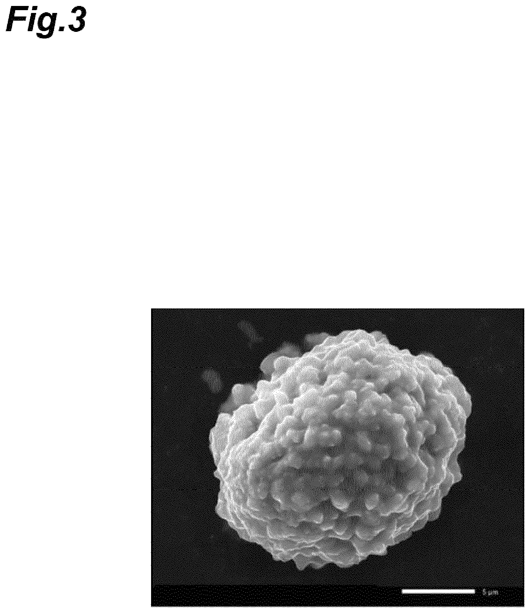

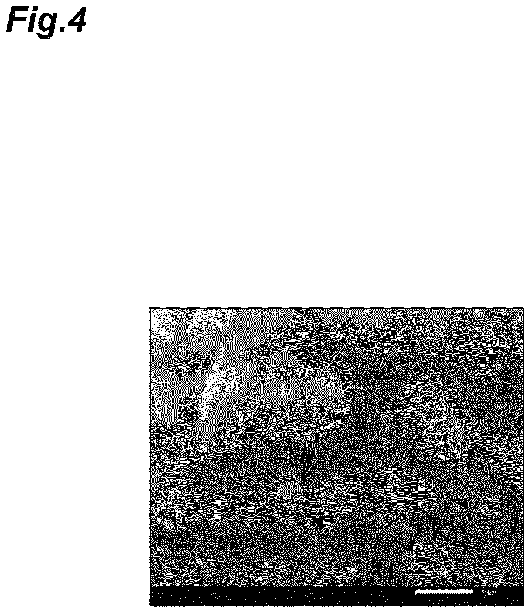

FIG. 3 is a scanning electron microscope image of a particle of the solid electrolyte material of Example 3. FIG. 4 is an enlarged view of a part of the particle in FIG. 3. As can be seen from FIGS. 3 and 4, the particle of the solid electrolyte material of Example 1 had a rugged structure with a size of 0.5 to 2 µm.

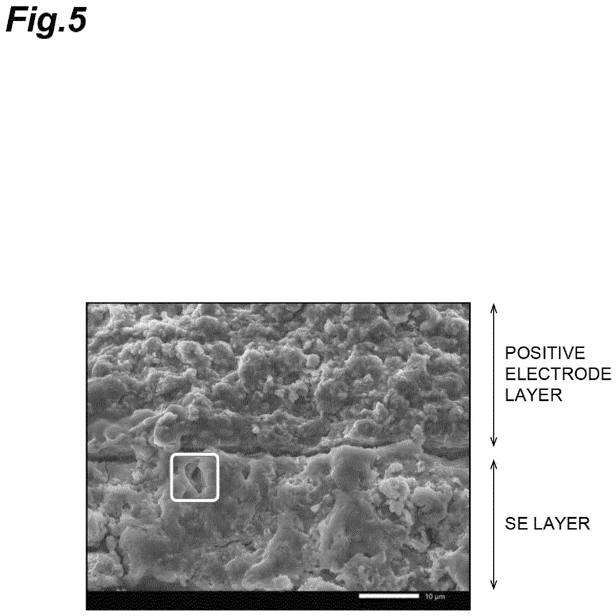

FIG. 5 is a scanning electron microscope image of a cross section of the laminate of Example 1. As shown in FIG. 5, although voids having a diameter of about 2 to 5 µm were observed, a large microcrack was not observed in both the positive electrode layer and the solid electrolyte layer.

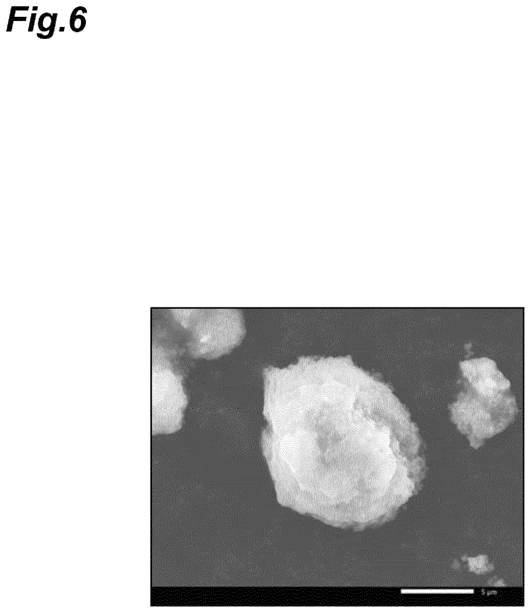

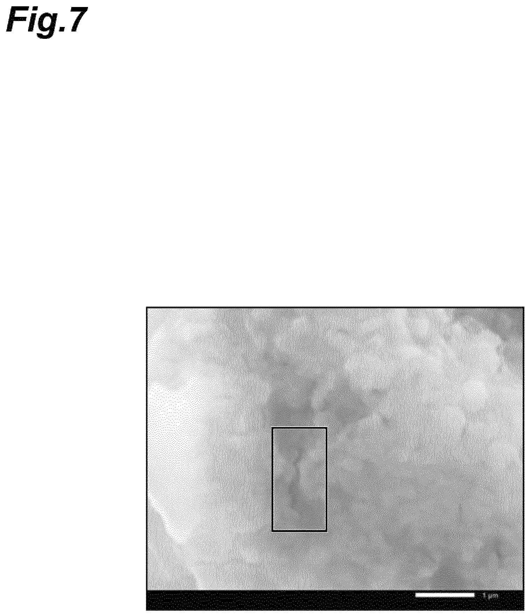

FIG. 6 is a scanning electron microscope image of a particle of the solid electrolyte material of Comparative Example 1. FIG. 7 is an enlarged view of a part of the particle in FIG. 6. As can be seen from FIGS. 6 and 7, the particle of Comparative Example 1 has no clear rugged structure, and a microcrack was observed in a portion surrounded by a square in FIG. 7.

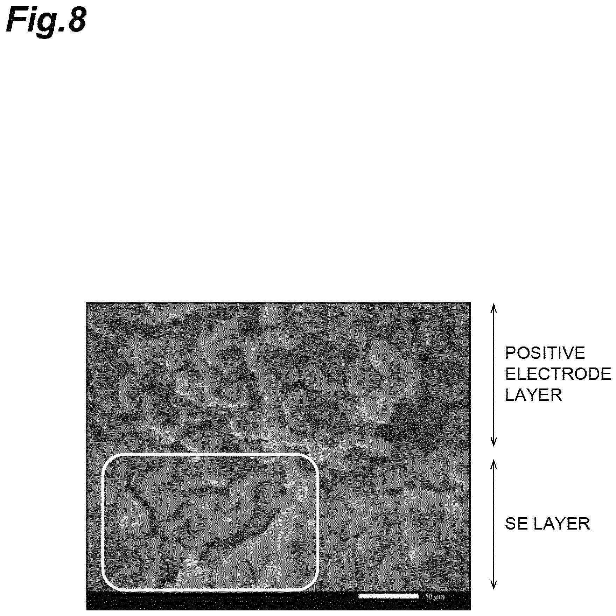

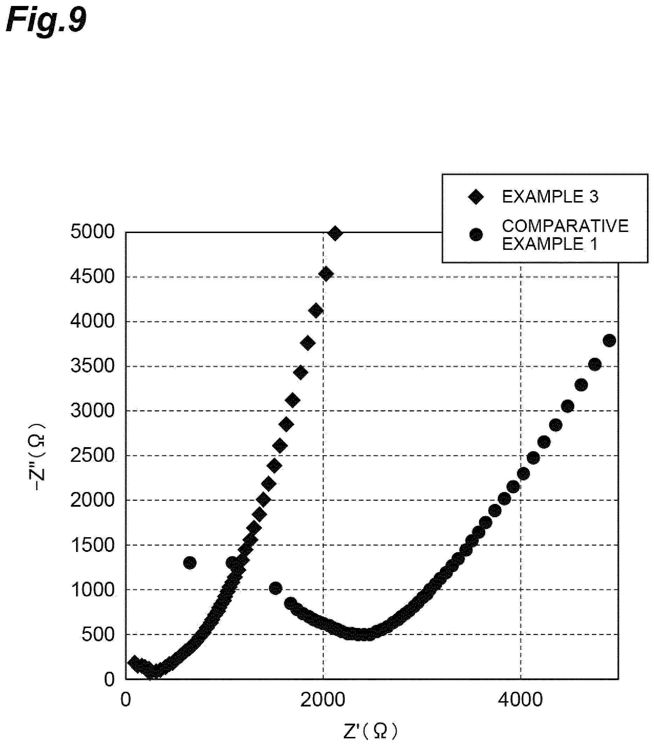

FIG. 8 is a scanning electron microscope image of a cross section of the laminate of Comparative Example 1. As shown in FIG. 8, although voids having a diameter of about 2 to 5 µm were observed, many microcracks were observed in both the positive electrode layer and the solid electrolyte layer, and the microcracks in the solid electrolyte layer had a length exceeding 10 µm (a portion surrounded by a square in FIG. 8). In FIG. 9, Nyquist plots of the laminate of Example 3 and the laminate of Comparative Example 1 are shown.

## Claims

1. A battery, comprising a positive electrode, a negative electrode, and an electrolyte layer disposed between the positive electrode and the negative electrode, wherein
the electrolyte layer includes a first electrolyte layer and a second electrolyte layer,
the first electrolyte layer is disposed between the positive electrode and the second electrolyte layer,
the first electrolyte layer contains a material different from a material of the second electrolyte layer,
the first electrolyte layer contains a solid electrolyte material containing an alkali metal element, a metal element except alkali metal elements or a metalloid element, and a halogen element, and
the metal element except alkali metal elements or the metalloid element includes at least one of Zr and In.

2. The battery according to claim 1, wherein a frequency at which a phase angle is smallest in a Nyquist plot obtained by performing impedance measurement in a range of 0.1 Hz to 891 kHz with a laminate including the positive electrode and the first electrolyte layer sandwiched between two SUS plates is 100 kHz to 891 kHz, and a ratio A/B of a resistance value (A) of a real part of the impedance measurement at a frequency at which the phase angle is smallest and a resistance value (B) of a real part of the impedance at 891 kHz is 1.0 to 3.5.

3. The battery according to claim 1 or 2, wherein
the solid electrolyte material contains a compound represented by A_{α}M_{β}Z_{γ}D_{ζ}O_{η},
wherein A is an alkali metal element, M is a metal element except alkali metal elements or a metalloid element, Z is a halogen element, D is at least one of P and S, and 1.6 ≤ α ≤ 3.5, 0 < β ≤ 1.2, 3 ≤ γ ≤ 6.5, 0 ≤ ζ ≤ 0.5, and 0 ≤ η ≤ 2 are satisfied.

4. The battery according to claim 1 or 2, wherein the second electrolyte layer contains at least one of an oxide-based solid electrolyte and a sulfide-based solid electrolyte.

5. The battery according to claim 1 or 2, wherein a thickness ratio between the first electrolyte layer and the second electrolyte layer is 1 : 0.2 to 1 : 1.

6. The battery according to claim 1 or 2, wherein the first electrolyte layer further contains an ionic liquid.

7. A laminate, comprising a positive electrode, and an electrolyte layer disposed on the positive electrode, wherein
the electrolyte layer includes a first electrolyte layer and a second electrolyte layer,
the first electrolyte layer is disposed between the positive electrode and the second electrolyte layer,
the first electrolyte layer contains a material different from a material of the second electrolyte layer,
the first electrolyte layer contains a solid electrolyte material containing an alkali metal element, a metal element except alkali metal elements or a metalloid element, and a halogen element, and
the metal element except alkali metal elements or the metalloid element includes at least one of Zr and In.

8. The laminate according to claim 7, wherein a frequency at which a phase angle is smallest in a Nyquist plot obtained by performing impedance measurement in a range of 0.1 Hz to 891 kHz with a laminate including the positive electrode and the first electrolyte layer sandwiched between two SUS plates is 100 kHz to 891 kHz, and a ratio A/B of a resistance value (A) of a real part of the impedance measurement at a frequency at which the phase angle is smallest and a resistance value (B) of a real part of the impedance at 891 kHz is 1.0 to 3.5.
